# EUROPEAN PATENT SPECIFICATION

(11) **EP 2 100 438 B1**
(45) Date of publication and mention of the grant of the patent: **11.08.2010**
(21) Application number: 08707071.0
(22) Date of filing: 17.01.2008
(51) Int. Cl.: H04M 3/42

(54) **HOSTED PBX SERVERS WITH TELEPHONY DEVICE ALLOCATION, ROUTING AND CONFIGURATION INFORMATION CONTROLLED BY CENTRAL DATABASE**
GEHOSTETE PBX-SERVER MIT DURCH EINE ZENTRALE DATENBANK GESTEUERTER TELEFONIEEINRICHTUNGSZUTEILUNG, ROUTING- UND KONFIGURATIONSINFORMATION
SERVEURS D'AUTOCOMMUTATEURS PRIVÉS HÉBERGÉS AVEC ATTRIBUTION DE DISPOSITIF TÉLÉPHONIQUE, INFORMATIONS DE ROUTAGE ET DE CONFIGURATION COMMANDÉES PAR UNE BASE DE DONNÉES CENTRALE

(43) Date of publication of application: 16.09.2009
(73) Proprietor: nfon AG, 80636 München (DE)
(72) Inventor: EDELMANN, Mathias, 82343 Pöcking (DE); HOPPE, Fabian, 81247 München (DE); OTTO, Marcus, 80638 München (DE)
(74) Representative: Grättinger Möhring von Poschinger Patentanwälte Partnerschaft
(86) International application number: PCT/EP2008/000305
(87) International publication number: WO 2009/089844

(56) References cited:
- GB-A- 2 403 624
- GB-A- 2 418 796
- US-A- 5 247 571
- US-A1- 2006 256 789

## Description

The subject invention relates generally to a system architecture for providing private branch exchange (in the following named PBX) services to customers according to the preamble of claim 1, and more particular to realizing highly availably hosted PBX services to a large customer base.

Today, most customers use a premises based PBX, but hosted PBX services become more and more popular.

A system architecture according to the preamble of claim 1 is known from GB 2 403 624 A and US 2006/0256789 A1.

Hosted PBX, also known as IP CENTREX services provide a PBX to customers as a service over a broadband connection, eliminating the need for a PBX on the customers' side. A hosted PBX service basically consists of a number of data processors providing the PBX service (in the following named PBX servers or PBX systems), broadband connections to the customers, a number of telephony devices at the customer site, each telephony device being capable of handling digitalized voice (e.g. Voice over IP - VoIP) and sending it over a broadband network, broadband connections to one or a number of public switched telephony network (PSTN) gateways and the PSTN gateways themselves.

Hosted PBX services are currently delivered on a per-server base, i.e. an individual customer gets assigned to a particular, standalone PBX-server. Subsequently the PBX-server gets configured to serve this customer (and all other customers assigned to the particular PBX server), the customer's telephony devices get configured to interact with the assigned PBX-system and the PSTN-gateway responsible for terminating the customers calls gets configured to send all inbound calls for this customer to the PBX-system assigned to this customer.

Any failure of such a PBX-server requires that the service delivery for the customers assigned to the failed PBX-system is taken over by one or several other PBX-servers. This requires either the existence of an identically configured standby PBX-server taking over the duties of the failed machine (cf. GB 2 403 624 A) or alternatively to move all customers of the failed PBX-server to other PBX-servers.

Both scenarios have their disadvantages as the first scenario doubles the need and cost for hardware and operations (thus making it prohibitive for a large scale deployment) while the latter causes significant effort and system/customer downtime as it requires to individually reconfigure the remaining PBX-servers taking over the customers of the failed PBX-server, to individually reconfigure the telephony devices at the customer sites, and to individually reconfigure the PSTN gateways to direct inbound calls for customers to the new PBX-systems.

US Patent 5,247,571 shows an analogue Area Wide Centrex system architecture, wherein a number of local communication lines are connected by means of a plurality of interconnected central office switching systems, each of said office switching systems being located at a different location. The call processing data for said office switching systems is stored in a data base. US 5,247,571, however, is totally silent as regards the configuration of end devices or gateways and is not concerned with devices or networks handling digitalized voice or any means for improving the availability of the system. US 5,247,571 further requires the provision and configuration of so-called service switching points (SSP's) which may constitute a further source of failures or malfunctions.

Thus, it is the object of the present invention to overcome the above described disadvantages and to provide a hosted PBX service that is cost efficient and highly available to customers.

This object is solved by the inventive system architecture of claim 1 and the claims dependent thereon.

The invention thereby comprises
o a number of PBX-systems that retrieve their configuration data from a (central) database and that preferably work each with an identical configuration,
o at least one provisioning service that provides configuration data to customer telephony devices and automatically retrieves said configuration data from a (central) database,
o a number of telephony devices capable of processing digitalized voice (e.g. VOIP) automatically retrieving their configuration data from the provisioning service and being connected to the PBX-system through broadband connections,
o at least one name service that provides customer specific routing information (e.g. about the particular PBX-server and/or telephony device(s) serving the particular customer) and automatically retrieves this information from a (central) database,
o at least one PSTN gateway that directs inbound customer calls based on customer specific routing information provided by the name service, whereby the at least one PSTN gateway is connected to the PBX-systems through at least one broadband connection and
o a database, that maintains the configuration data and routing information for all PBX-systems, the provisioning service, the telephony devices and the name service.

The database might either be one central database being accessed from all mentioned architecture components or is represented by several replicated instances of one central (master) database, which - in the latter case - preferably gets at least partially replicated to local databases on all PBX-systems, the provisioning service and the name service.

The present invention allows to move hosted PBX customers between PBX-systems by simply changing the assignment of an individual customer to a particular PBX-server in the central database, and minimizing the downtime for a customer as all involved components of the architecture get automatically reconfigured. A further advantage of the present can be seen in the fact that the inventive system architecture may be built with simple and cost effective PBX servers, since there is no need for the provision of expensive fail-safe PBX servers or the provision of identically configured standby systems. This dramatically reduces the costs for the whole system.

The only part of the inventive system that has to be secured against a break down by suitable means (for example by providing a second identically configured system) is the machine/database server on which the central (master) database is located.

The provisioning service and the name service may be realized on a common "provisioning and name server" or on two different servers.

Features of exemplary implementations of the invention will also become apparent from the dependent claims, the accompanying drawings and the subsequent description, which starts with a brief introduction to the Figures and then focuses on a description of the present invention, thereby making reference to one preferred embodiment thereof.

One preferred embodiment of the invention is described with the accompanying drawings, showing in
- FIG. 1: a representation of a conventional hosted PBX system architecture,
- Fig. 2: a representation of activities for a change be- tween conventional hosted PBX systems according to Fig. 1,
- Fig. 3: a representation of a preferred embodiment of the inventive hosted PBX system architecture, and
- Fig. 4: a representation of activities for a change from a conventional to an inventive hosted PBX archi- tecture.

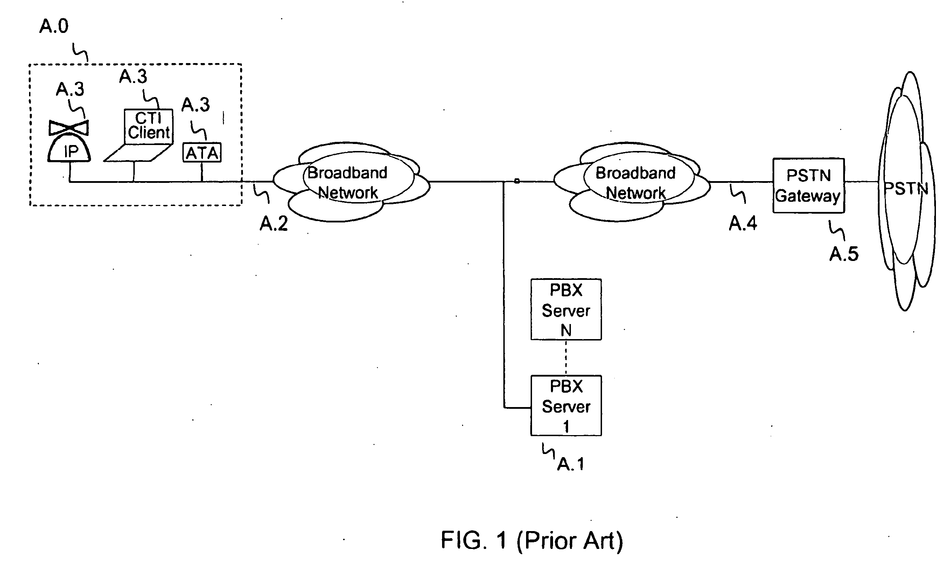

FIG. 1 is a representation of a conventional hosted PBX system architecture with
o a plurality of PBX-servers (A.1),
o one or more broadband connections (A.2) to customers (A.0),
o one or more telephony devices (A.3) at each customer site,
o one or more PSTN gateways (A.5), and
o one or more broadband connections (A.4) to a PSTN gateway (A.5).

The telephony devices (A.3) of a given customer (A.0) are assigned to one of the PBX-servers (A.1). The PSTN gateway (A.5) is configured to route all inbound calls for a given customer (A.0) to the PBX-server (A.1) responsible for this particular customer.

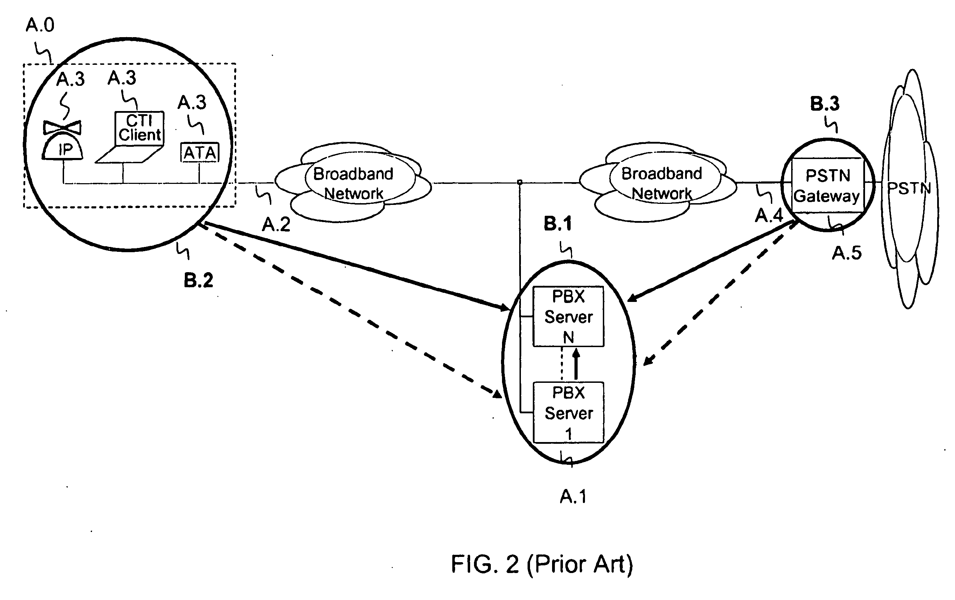

FIG. 2 is a representation explaining the activities, required to move a given customer (A.0) from one PBX-server (A.1; "old" PBX-server) to another PBX-server (A.1; "new" PBX-server) in the conventional hosted PBX system architecture according to FIG. 1.

This includes
o the manual reconfiguration (B.1) of the "new" PBX-server and moving the customer configuration data from the "old" PBX-server to the "new" PBX-server,
o the manual reconfiguration (B.2) of one or more telephony devices (A.3) of one or more customers (A.0) to interact with their assigned "new" PBX-system, and
o the manual reconfiguration (B.3) of one or more PSTN gateways (A.5) to route inbound calls from the PSTN for the particular customer to his assigned "new" PBX-system.

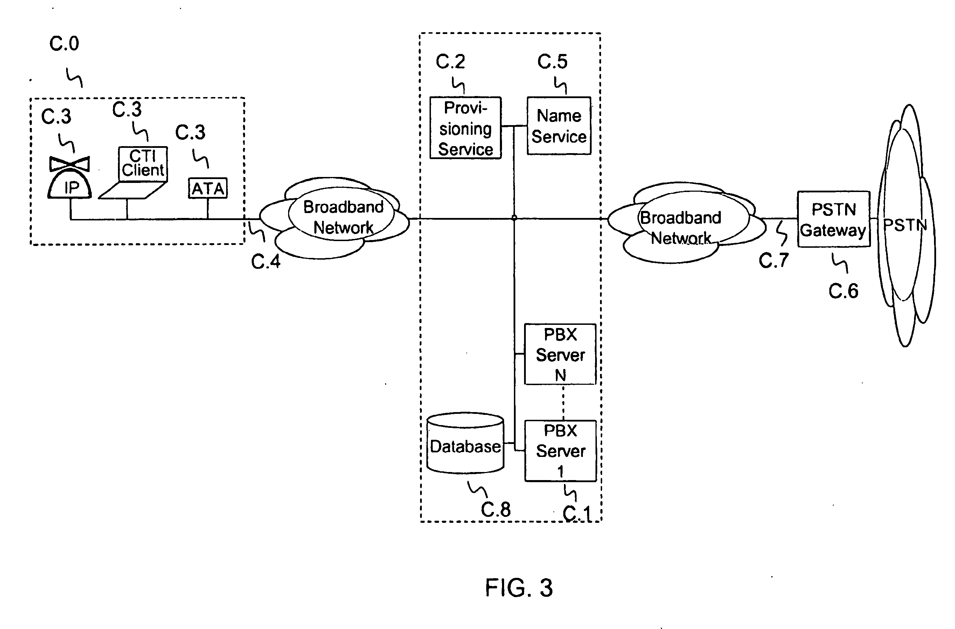

FIG. 3 is a representation of a preferred embodiment of the inventive hosted PBX system architecture comprising
o a number of PBX-systems (C.1) all running with an identical configuration loaded from the central database (C.8),
o one or more provisioning services (C.2) for the telephony devices (C.3), retrieving their data from the database (C.8),
o one or more broadband connections (C.4) to a customer (C.0),
o one or more telephony devices (C.3) at each customer site (C.0), retrieving their configuration data from the provisioning service (C.2),
o one or more name services (C.5), loading their routing information from the central database (C.8),
o one or more PSTN-gateways (C.6), retrieving the routing information for an inbound call for a given customer from the name service (C.5),
o one or more broadband connections (C.7) between the PSTN-gateways (C.6) and the PHX-systems (C.1), and
o one central database (C.8), which can alternatively be represented by several replicated instances of one central master database.

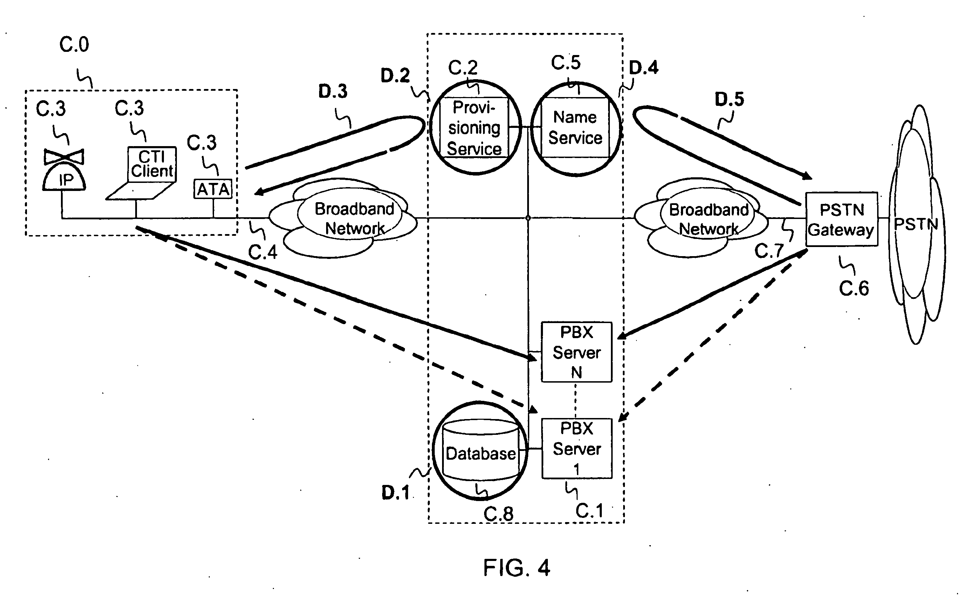

FIG. 4 is a representation of the activities, required to move a given customer (C.0) from one "old" PBX-server (C.1) to one or more "new" PBX-servers (C.1) in the inventive hosted PBX architecture according to FIG. 3 with
o a (D.1) manual change of the PBX-system assignment for a given customer in the central database (C.8),
o an automatic update (D.2) of the configuration data for the telephony devices (C.3) provisioned by the provisioning service (C.2),
o a trigged or timed reload (D.3) of the telephony devices' (C.3) configuration data from the provisioning service (C.2), resulting in each telephony device (C.3) being configured to interact with the "new" PBX-server (C.1),
o the automatic update (D.4) of the routing information in the name service (C.5), which is subsequently transmitted (D.5) to the PSTN gateways (C.6), resulting in a given PSTN gateway (C.6) automatically routing inbound calls for a given customer to the "new" PBX-system (C.1).

A manual reconfiguration of the "old" and "new" PBX-systems (C.1) is not necessary, as all PBX-systems (C.1) work with an identical configuration (that allows them to communicate with the central database (C.8)), being capable of serving any telephony device (C.3) of any (C.0) customer at any time without reconfiguration.

Turing back to FIG. 3 a telephony device (C.3) in one example of the present invention comprises one or more mobile or fixed telephones capable to establish a voice communication with the PBX-systems (C.1) over a broadband connection, one or more software programs on a desktop, mobile or server computers capable of establishing a voice communication with the PBX-systems (C.1) over a broadband connection, and/or one or more network devices (in the following named ATA) allowing to connect classic PSTN devices to the PBX service(C.1).

All telephony devices (C.3) deployed in this architecture are capable of retrieving their configuration data from a provisioning service (C.2) via a broadband connection. The telephony devices (C.3) in one example pull their configuration data themselves triggered through an internal timer while in another example they get triggered externally to update their configuration data via commands sent through the broadband network. All telephony devices (C.3) route calls to the PBX-system (C.1) that is specified in the configuration data from the provisioning service (C.2).

The provisioning service (C.2) in one example comprises one or more applications accessible through the broadband network, providing dynamically computed configuration data to the telephony devices (C.3) based on information stored in the database (C.8). In another example the provisioning service (C.2) comprises one or more applications compiling configuration data for the telephony devices (C.3) based on information stored in the database (C.8) and one or more data storage units accessible from the network, providing the compiled configuration data to the telephony devices (C.3).

The PBX-systems (C.1) in one example comprise one or more software applications running on computer systems, providing voice services over broadband network, working with configuration data and telephony device specific data (e.g. Voicemail, Announcements,...) stored in a database (C.8). In another example, the PBX-systems (C.1) comprise one or more hardware appliances, providing voice services over the broadband network, working with configuration data and telephony device specific data stored in a database (C.8). All PBX-system (C.1) preferably work with an identical configuration stored in the database (C.8), resulting in being able to serve any telephony device (C.3) at any time, routing calls from any telephony device (C.3) to any other telephony device (C.3) or PSTN gateway (C.6) at any time and processing any inbound call from any PSTN gateway (C.6) at any time. Any configuration change or telephony device specific data generated through an event of a telephony device (C.3) or PBX-system (C.1) is stored in the database (C.8), thereby being immediately available to all PBX-systems (C.1). The invention thereby offers a new system architecture that is more flexible with respect to the hosted PBX or IP centrex solutions known from the prior art.

The PSTN-gateways (C.6) in one example comprise one or more software applications running on one or more computer systems routing calls into the public telephony network either via TDM (time division multiplexing) or a broadband network. In another example a PSTN-gateway (C.6) of the inventive system architecture may comprise one or more hardware appliances routing calls into the public telephony network either via TDM or a broadband network.

The PSTN gateway (C.6) retrieves the actual routing information for inbound calls (i.e. to which PBX-system (C.1) a particular call for a given customer (C.0) should get forwarded) from the name service (C.5). In one example the PSTN gateway(s) (C.6) and the name service (C.5) are configured such that the routing information gets retrieved by the PSTN gateway (C.6) in real time for each individual call, in another example, the routing information gets updated in periodic intervals. In another example the routing information gets pushed from the name service to the PSTN-gateways (C.6) whenever routing data changed.

The name service (C.5) in one example comprises one or more DNS name servers, providing one or more host record per customer (C.0) and one or more application updating the one or more DNS name server with routing information. In another example the name service (C.5) comprises one or more web sites or other application accessible through the broadband network, providing routing information about the customer (C.0) based on the information stored in the database (C.8). In another example the name service (C.5) comprises one or more application retrieving routing information from the database (C.8) and storing the routing information in one or more data storage units accessible from the network providing routing information about the customer (C.0).

The database (C.8) in one example comprises one or more central databases storing all configuration data and telephony device specific data like Voicemail, Announcements etc. In another example, the database (C.8) comprises one or more central master databases that get replicated to one or more slave databases located on other systems, e.g. the PBX-systems (C.1), the provisioning service (C.2) and/or the name service (C.5).

Turing to Fig. 4 the hosted PBX service provider executes a change (D.1) of the PBX-system (C.1) assignment of one or more telephony devices (C.3) in the central database (C.8). In one example the provider changes the assignment of each individual telephony device (C.3) to a specific PBX-system (C.1). In another example the provider changes the assignment of a customer (C.0) to a PBX-system (C.1), thereby changing the assignment of each telephony device (C.3) associated with the specific customer implicitly.

The provisioning service (C.2) recognizes automatically the change (D.1) of PBX-system assignment to the telephony devices (C.3) and updates the provisioning information for each involved telephony device (C.3). In one example this might happen through an event sent to the provisioning service (C.2) through the database (C.8), triggering the provisioning service (C.2) to update itself. In another example the provisioning service (C.2) regularly updates itself through queries of the database (C.8). In another example the provisioning service (C.2) queries the database (C.8) anytime a telephony device (C.3) requests configuration data.

The telephony devices (C.3) retrieve updated configuration data, assigning them to a new PBX-system (C.1). In one example this happens through a reload of the configuration data through the telephony devices (C.3) triggered by an internal timer of the telephony devices (C.3). In another example the reload of the configuration data by the telephony devices (C.3) happens due to an event sent from the provisioning service (C.2). In another example the reload of the configuration data by the telephony devices (C.3) happens due to an event sent from the PBX-systems (C.1).

## Claims

1. System architecture for providing hosted PBX services to a plurality of customers (C.0) comprising
- a plurality of PBX servers (C.1),
- one or more telephony devices (C.3) for each customer (C.0), each telephony device (C.3) being capable of processing digitalized voice and being connected to a PBX server (C.1) through at least one broadband connection (C.4),
- at least one PSTN gateway (C.6) that is connected to the PBX servers (C.1) through at least one broadband connection (C.7) and adapted to direct inbound calls for a customer (C.0) to a PBX server (C.1) based on customer specific routing information,
**characterized in that**
the system architecture further comprises
- one or more databases (C.8) representing either one central database or in addition one or more replicated instances of said central database, whereby the one or more databases (C.8) include customer specific configuration data for all telephony devices (C.3) and configuration data for all PBX servers (C.1) as well as the customer specific routing information for the at least one PSTN gateway (C.6),
- at least one provisioning service (C.2) for automatically providing all telephony devices (C.3) with the customer specific configuration data and
- at least one name service (C.5) for automatically providing all PSTN gateways (C.6) with the customer specific routing information,
and wherein the at least one provisioning service (C.2), the at least one name service (C.5) and all PBX servers (C.1) are connected to the at least one database (C.8) and are configured to automatically retrieve the configuration data and customer specific routing information from the at least one database (C.8),
such that a change of assignment of a customer (C.0) or at least one telephony device (C.3) between PBX-servers (C.1) is effected by changing the customers' or the telephony devices' assignment to a particular PBX-server in the at least one database (C.8).

2. System architecture according to claim 1, wherein the telephony devices (C.3) are provided with their configuration data from the provisioning service (C.2).

3. System architecture according to claim 1, wherein the name service (C.5) and the at least one PSTN gateway (C.6) are configured such that each PSTN gateway (C.6) retrieves the actual routing information in real time for each incoming call.

4. System architecture according to claim 1, wherein the name service (C.5) and the at least one PSTN gateway (C.6) are configured such that a PSTN gateway (C.6) retrieves the actual routing information in periodic intervals or when the routing information in the central database (C.8) has changed.

## Patentansprüche

1. Systemarchitektur zur Bereitstellung von gehosteten PBX-Diensten für mehrere Kunden (C.0), umfassend
- mehrere PBX-Server (C.1),
- ein oder mehrere Telefongeräte (C.3) für jeden Kunden (C.0), wobei jedes Telefongerät (C.3) in der Lage ist, digitalisierte Sprache zu verarbeiten, und über mindestens eine Breitbandverbindung (C.4) mit einem PBX-Server (C.1) verbunden ist,
- mindestens ein PSTN-Gateway (C.6), welches über mindestens eine Breitbandverbindung (C.7) mit den PBX-Servern (C.1) verbunden ist und dazu eingerichtet ist, ankommende Anrufe für einen Kunden (C.0) auf der Basis kundenspezifischer Routinginformationen zu einem PBX-Server (C.1) zu leiten,
**dadurch gekennzeichnet, dass**
die Systemarchitektur ferner umfasst
- eine oder mehrere Datenbanken (C.8), die entweder eine zentrale Datenbank oder zusätzlich eine oder mehrere replizierte Instanzen der zentralen Datenbank repräsentieren, wobei die eine oder die mehreren Datenbanken (C.8) kundenspezifische Konfigurationsdaten für alle Telefongeräte (C.3) und Konfigurationsdaten für alle PBX-Server (C.1) sowie die kundenspezifischen Routinginformationen für das mindestens eine PSTN-Gateway (C.6) enthalten,
- mindestens einen Bereitstellungsdienst (C.2) zur automatischen Versorgung aller Telefongeräte (C.3) mit den kundenspezifischen Konfigurationsdaten, und
- mindestens einen Namensdienst (C.5) zur automatischen Versorgung aller PSTN-Gateways (C.6) mit den kundenspezifischen Routinginformationen,
und wobei der mindestens eine Bereitstellungsdienst (C.2), der mindestens eine Namensdienst (C.5) und alle PBX-Server (C.1) mit der mindestens einen Datenbank (C.8) verbunden sind und dafür konfiguriert sind, automatisch die Konfigurationsdaten und kundenspezifischen Routinginformationen aus der mindestens einen Datenbank (C.8) abzurufen,
derart, dass eine Änderung der Zuweisung eines Kunden (C.0) oder mindestens eines Telefongerätes (C.3) zwischen PBX-Servern (C.1) durch Ändern der Zuweisung der Kunden oder der Telefongeräte zu einem bestimmten PBX-Server in der mindestens einen Datenbank (C.8) bewirkt wird.

2. Systemarchitektur nach Anspruch 1, wobei die Telefongeräte (C.3) von dem Bereitstellungsdienst (C.2) mit ihren Konfigurationsdaten versorgt werden.

3. Systemarchitektur nach Anspruch 1, wobei der Namensdienst (C.5) und das mindestens eine PSTN-Gateway (C.6) derart konfiguriert sind, dass jedes PSTN-Gateway (C.6) die aktuellen Routinginformationen in Echtzeit für jeden ankommenden Anruf abruft.

4. Systemarchitektur nach Anspruch 1, wobei der Namensdienst (C.5) und das mindestens eine PSTN-Gateway (C.6) derart konfiguriert sind, dass ein PSTN-Gateway (C.6) die aktuellen Routinginformationen in regelmäßigen Zeitabständen abruft, oder wenn sich die Routinginformationen in der zentralen Datenbank (C.8) geändert haben.

## Revendications

1. Architecture de système pour fournir des services PBX hébergés à une pluralité de clients (C.0) comprenant
- une pluralité de serveurs PBX (C.1),
- un ou plusieurs dispositifs de téléphonie (C.3) pour chaque client (C.0), chaque dispositif de téléphonie (C.3) étant en mesure de traiter une voix numérisée et étant connecté à un serveur PBX (C.1) par l'intermédiaire d'au moins une connexion à large bande (C.4),
- au moins une passerelle PSTN (C.6) qui est connectée aux serveurs PBX (C.1) par l'intermédiaire d'au moins une connexion à large bande (C.7) et adaptée afin de diriger des appels entrants pour un client (C.0) vers un serveur PBX (C.1) sur la base d'une information de routage spécifique à un client,
**caractérisée en ce que**
l'architecture de système comprend en outre
- une ou plusieurs bases de données (C.8) représentant soit une base de données centrale, soit en plus une ou plusieurs instances dupliquées de ladite base de données centrale, moyennant quoi la ou les bases de données (C.8) inclut des données de configuration specifiques au client pour tous les dispositifs de téléphonie (C.3) et données de configuration pour tous les serveurs PBX (C.1) ainsi que l'information de routage spécifique au client pour la au moins une passerelle PSTN (C.6),
- au moins un service de provisionnement (C.2) pour fournir automatiquement à tous les dispositifs de téléphonie (C.3) les données de configuration spécifiques au client et
- au moins un service de nom (C.5) pour fournir automatique à toutes les passerelles PSTN (C.6) l'information de routage spécifique au client,
et dans laquelle le au moins un service de provisionnement (C.2), le au moins un service de nom (C.5) et tous els serveurs PBX (C.1) sont connectés à la au moins une base de données (C.8) et sont configurés afin d'extraire automatiquement d'au moins une base de données (C.8) les données de configuration et l'information de routage spécifique au client,
de sorte qu'un changement d'assignation d'un client (C.0) ou d'au moins un dispositif de téléphonie (C.3) entre les serveurs PBX (C.1) soit effectué en changeant l'assignation de client ou de dispositifs de téléphonie à un serveur PBX particulier dans la au moins une base de données (C.8).

2. Architecture de système selon la revendication 1, dans laquelle les dispositifs de téléphonie (C.3) sont pourvus de leurs données de configuration provenant du service de provisionnement (C.2).

3. Architecture de système selon la revendication 1, dans laquelle le service de nom (C.5) et la au moins une passerelle PSTN (C.6) sont configurés de sorte que chaque passerelle PSTN (C.6) extraie l'information de routage effective en temps réel pour chaque appel entrant.

4. Architecture de système selon la revendication 1, dans laquelle le service de nom (C.5) et la au moins une passerelle PSTN (C.6) sont configurés de sorte qu'une passerelle PSTN (C.6) extraie l'information de routage effective à des intervalles périodiques ou quand l'information de routage dans la base de données centrale (C.8) a changé.
